(19) Europäisches Patentamt
European Patent Office
Office européen des brevets

(11) **EP 2 402 295 A1**

(12) **EUROPEAN PATENT APPLICATION**
published in accordance with Art. 153(4) EPC

(43) Date of publication:
**04.01.2012 Bulletin 2012/01**

(21) Application number: **10746227.7**

(22) Date of filing: **24.02.2010**

(51) Int Cl.:
*C04B 35/46* (2006.01)  *B01D 39/20* (2006.01)
*B01D 46/00* (2006.01)  *B01D 53/94* (2006.01)
*B01J 35/04* (2006.01)  *C04B 35/195* (2006.01)
*C04B 35/44* (2006.01)  *F01N 3/02* (2006.01)

(86) International application number:
**PCT/JP2010/052865**

(87) International publication number:
**WO 2010/098347 (02.09.2010 Gazette 2010/35)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **26.02.2009 JP 2009043885**

(71) Applicant: **Kyocera Corporation**
**Kyoto-shi**
**Kyoto 612-8501 (JP)**

(72) Inventor: **YAMAGUCHI, Shinichi**
**Kirishima-shi**
**Kagoshima 899-4396 (JP)**

(74) Representative: **Banzer, Hans-Jörg**
**Kraus & Weisert**
**Patent- und Rechtsanwälte**
**Thomas-Wimmer-Ring 15**
**80539 München (DE)**

(54) **HONEYCOMB STRUCTURE AND DEVICE FOR TREATING GAS**

(57) A honeycomb structure (1) which includes thin partitions (4) and which, even when frequently regenerated by heating, does not have increased residual stress and is less apt to crack. Provided is a device (10) for treating a gas. The honeycomb structure (1) is equipped with: gas-permeable partitions (4) which have wall surfaces (4a) extending along the axial direction and by which a plurality of flow-through holes (2) have been separated; and a sealing material (3) with which the inlets and outlets of the plurality of flow-through holes (2) are alternately blocked. The partitions (4) are constituted of a ceramic including a plurality of crystal grains, and at least some of the crystal grains have a solid phase (8) which extends inward from the surface and contains the main component of a grain boundary phase (7).

Fig. 1(a)

(Cont. next page)

Fig. 1(b)

**Description**

Technical Field

The present invention relates to a honeycomb structure used in a filter that captures particulates containing carbon as a main component contained in an exhaust gas emitted from an internal combustion engine, a incinerating furnace, a boilers and the like that are power sources of an automobile, a fork lift, an electric generator, a ship, a hydraulic shovel, a bulldozer, a wheel loader, a rough terrain crane, a tractor, a combine, a power tiller, railway vehicle, construction vehicle and the like, a filter that decomposes and removes toxic dioxin, or a filter that filtrates a liquid such as city water or sewerage; and to a gas treatment device.

Background Art

Heretofore, since particulates containing carbon as a main component (particularly particulates containing carbon as a main component in an exhaust gas of a diesel engine) that contained in an exhaust gas emitted from an internal combustion engine, an incineration furnace, a boiler and the like, particulates containing a sulfate formed by oxidation of sulfur as a main component, particulates of unburned hydrocarbon made of a polymer and the like may cause environmental pollution, these particulates have been removed by adsorbing on a filter.

As the filter, for example, a honeycomb structure is used, and the honeycomb structure includes a plurality of flow paths separated from each other by an air-permeable partition wall having a wall surface along in an axial direction, and plugging members where each of an input side and output side of the plurality of flow paths is alternately plugged. An exhaust gas, that flows into the honeycomb structure from an end face of the input side of the honeycomb structure, is introduced into the flow path, and then the exhaust gas enters into the adjacent flow path through a partition wall and discharged through an end face of the output side. Then, the particulates are captured on the partition wall when the exhaust gas passes through the partition wall.

Since air permeability of the partition wall gradually deteriorates when capturing of the particulates is continued, the honeycomb structure must be periodically regenerated according to the amount of particulates captured. The method of regenerating the honeycomb structure includes, for example, a method in which particulates captured on a partition wall undergoes ignition, and combustion and propagation by heating using an electric heater disposed at an end face of the honeycomb structure. When such a method is employed, a gas for regeneration, such as air is introduced into the honeycomb structure.

When regeneration of the honeycomb structure is repeated by the aforementioned method, stress generated in the honeycomb structure is accumulated to generate large residual stress, and thus the honeycomb structure may be sometimes damaged due to this residual stress.

In order to suppress damage due to the residual stress, a honeycomb structure disclosed in Patent Document 1 is proposed.

That is, there is proposed a diesel engine exhaust gas filter in which one end face of predetermined cells of a honeycomb structure containing aluminum titanate as a main component is plugged with a plugging member, and the other end face of the remaining unplugged cells is also plugged in the same manner.

Prior Art Documents

Patent Documents

Patent Document 1: JP-A-9-29022

Disclosure of the Invention

Problems to be Solved by the Invention

The diesel engine exhaust gas filter proposed in Patent Document 1 has a small thermal expansion coefficient and is excellent in heat resistance and thermal shock resistance since aluminum titanate is used in a filter material. However, in case a partition wall is made thin so as to reduce pressure loss in the partition wall, residual stress relatively increases when regeneration is performed by repeatedly heating, and thus cracks are likely to occur.

In light of these problems, an object of the present invention is to provide a honeycomb structure that does not cause an increase in residual stress and is less likely to undergo cracking even when a honeycomb structure having a thin partition wall is frequently regenerated by heating, and a gas treatment device.

Means for Solving the Problems

The honeycomb structure of the present invention includes a plurality of flow paths separated from each other by an air-permeable partition wall including a wall face along an axial direction, and plugging members plugging an input side and an output side of the plurality of flow paths alternately, wherein the partition wall is made of a ceramic body containing a plurality of crystal grains and a solid phase containing a main component of a grain boundary phase exists from a surface to the inside in at least a part of the crystal grains.

Also, the gas treatment device of the present invention includes a honeycomb structure in the above constitution.

Effects of the Invention

Since the honeycomb structure of the present invention includes a plurality of flow paths separated from each other by an air-permeable partition wall including a wall face along an axial direction, and plugging members plugging an input side and an output side of the plurality of flow paths alternately, wherein the partition wall is made of a ceramic body containing a plurality of crystal grains and a solid phase containing a main component of a grain boundary phase exists from a surface to the inside in at least a part of the crystal grains, a part of accumulated residual stress is relieved as a result of absorption to the solid phase or the grain boundary phase through the solid phase by heating upon regeneration, and thus cracking is less likely to occur in the partition wall.

Also, the gas treatment device of the present invention enables regeneration with good efficiency over a long period of time since a honeycomb structure, that is less likely to undergo cracking in a partition, is mounted when the exhaust gas treatment device is provided with the honeycomb structure of the present invention.

Brief Description of the Drawings

Fig. 1 schematically shows an example of embodiments of a honeycomb structure of the present invention, in which Fig. 1(a) is a perspective view, and Fig. 1(b) is a sectional view taken along lines B-B' in Fig. 1(a).
Figs. 2 (a) and 2(b) are plan views showing a part of each of the end face of an input side and an output side of honeycomb structure of the example shown in Fig. 1.
Fig. 3 shows an example of embodiments of the honeycomb structure of the present invention, in which Fig. 3(a) is a micrograph showing a part of a ceramic body constituting a partition wall, and Fig. 3 (b) is a micrograph showing a part of a ceramic body constituting plugging members, each micrograph being taken by a scanning electron microscope.
Fig. 4 shows another example of embodiments of the honeycomb structure of the present invention, in which Fig. 4(a) is a plan view showing a part of an input side end face, and Fig. 4(b) a plan view showing a part of an output side end face.
Fig. 5 shows another example of embodiments of the honeycomb structure of the present invention, in which Fig. 5(a) a plan view showing a part of an input side end face, and Fig. 5(b) is a plan view showing a part of an output side end face.
Fig. 6 is a schematic sectional view of a gas treatment device, that schematically shows an example of embodiments of the present invention.

Mode for Carrying Out the Invention

Modes for carrying out the present invention will be described in detail with reference to the accompanying drawings.

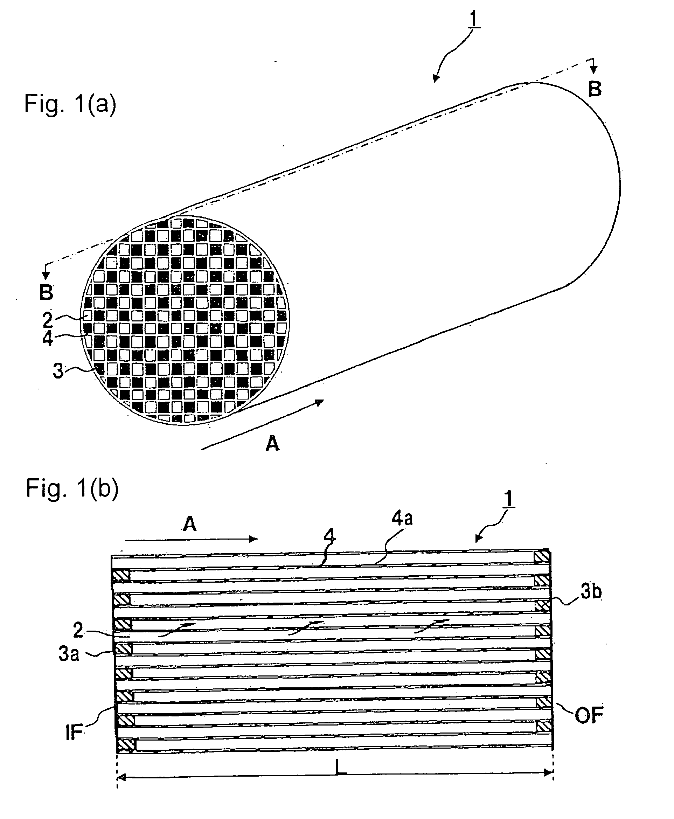

Fig. 1 schematically shows an example of embodiments of a honeycomb structure of the present invention, in which Fig. 1(a) is a perspective view, and Fig. 1(b) is a sectional view taken along lines B-B' in Fig. 1(a).

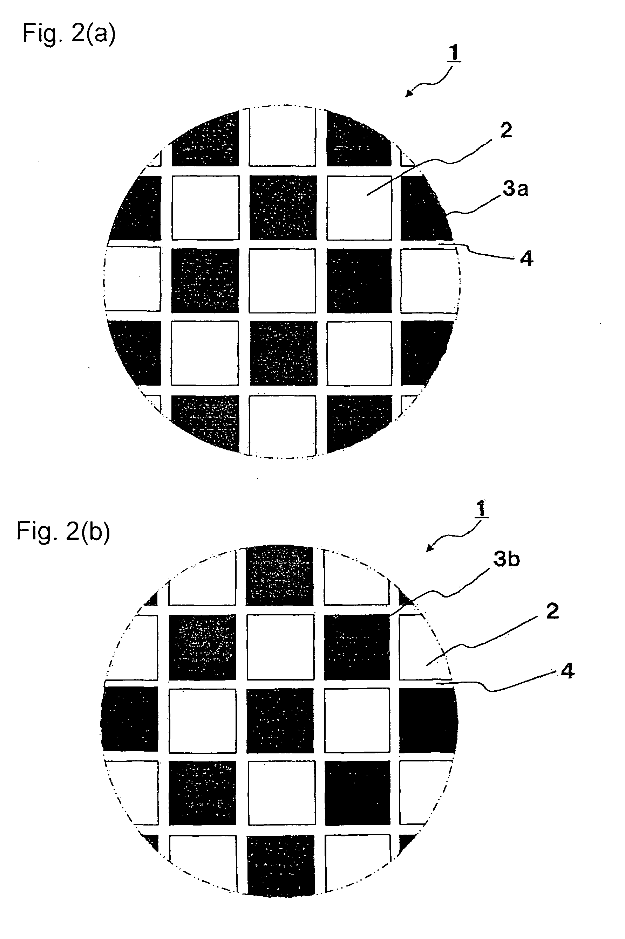

Figs. 2 (a) and 2(b) are plan views showing a part of each of the end face of an input side and an output side of honeycomb structure of the example shown in Fig. 1.

The honeycomb structure 1 of the present invention shown in Fig. 1 is a honeycomb structure 1 includes a plurality of flow paths 2 separated from each other by an air-permeable partition wall 4 having a wall face 4a along an axial direction A, and plugging members 3 where each of an input side and an output side of the plurality of flow paths 2 is alternately plugged.

The respective flow paths 2 can have various shapes such as a circular shape, various square shapes, a tetragon shape with a corner portion having a circular arc shape, or a combination of a tetragon shape and an octagon shape. In one honeycomb structure 1, flow paths 2 each having a different planar shape may simultaneously exist.

In the honeycomb structure 1, as shown in Fig. 2, any one of adjacent flow paths 2 is plugged by plugging members 3 (3a and 3b) on each end face of an input side and an output side.

The honeycomb structure 1 of the example shown in Figs. 1 and 2 has, for example, a columnar shape in which an outer diameter is from 100 to 200 mm and a length in an axial direction A is from 100 to 250 mm, and the number of flow paths 2 in a cross section perpendicular to an axial direction A is from 5 to 124 (32 to 800 CPSI) per 100 $mm^2$. The partition wall 4 has a width of 0.05 mm or more and 0.25 mm or less, and the plugging member 3 has a thickness of 1 mm or more and 5 mm or less. CPSI means Cells Per Square Inches.

When a diesel engine (not shown) is operated, an exhaust gas (EG) is generated and this exhaust gas (EG) is introduced through flow path 2 in which plugging members 3a are not formed on the input side, and this exhaust gas is prevented from flowing out by plugging members 3b formed on the output side. The exhaust gas (EG), that is prevented from flowing out, passes through an air-permeable partition wall 4 and then introduced into adjacent flow paths 2. When the exhaust gas (EG) passes through the partition wall 4, particulates containing carbon in the exhaust gas (EG) as a main component, particulates containing a sulfate formed by oxidation of sulfur as a main component and particulates of unburned hydrocarbon made of a polymer are captured in pores of the partition wall 4 (hereinafter, these particulates are collectively referred to as particulates, simply). The exhaust gas (EG) purified by capturing of the particulates is discharged to the outside through the flow paths 2 in which plugging members 3b are not formed.

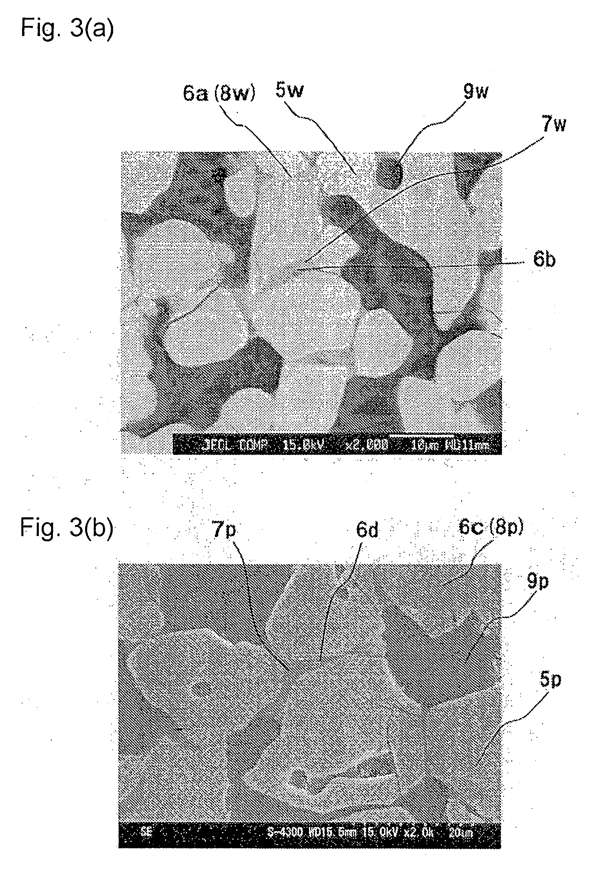

Fig. 3 shows an example of embodiments of the honeycomb structure of the present invention, in which Fig. 3(a) is a micrograph showing a part of a ceramic body constituting a partition wall, and Fig. 3 (b) is a micrograph showing a part of a ceramic body constituting plugging members, each micrograph being taken by a scanning electron microscope.

In the honeycomb structure 1 of the present invention shown in Figs. 1 and 2, it is important that the partition wall 4 is made of a ceramic body containing a plurality of crystal grains 5w and a solid phase 8w containing a main component of a grain boundary phase 7w exists from a surface to the inside in at least a part of the crystal grain 5w, as shown in Fig. 3(a).

With the constitution, a part of accumulated residual stress is relieved as a result of absorption to the solid phase 8w or the grain boundary phase 7w through the solid phase 8w by heating upon regeneration, and thus cracking is less likely to occur in the partition wall 4.

Also in the honeycomb structure 1 of the present invention shown in Figs. 1 and 2, it is preferred that the plugging member 3a, 3b are made of a ceramic body containing a plurality of crystal grains 5p and a solid phase 8p containing a main component of a grain boundary phase 7p exists from a surface to the inside in at least a part of the crystal grains 5p, as shown in Fig. 3(b).

With the constitution, a part of accumulated residual stress is relieved as a result of absorption to the solid phase 8p or the grain boundary phase 7p through the solid phase 8p by heating upon regeneration, and thus cracking is less likely to occur in the plugging member 3a, 3b.

The main component of the grain boundary phases 7w, 7p respectively means an oxide that accounts for 50% by mass or more of 100 parts by mass of the oxide when the components that constitute the grain boundary phases 7w, 7p are expressed in terms of the oxide. The content of the component that constitutes the grain boundary phases 7w, 7p can be determined by inductively coupled plasma (ICP) spectroscopy, fluorescent X-ray spectroscopy or energy dispersive X-ray spectroscopy.

The main component of the crystal grains 5w, 5p, that respectively constitute the partition wall 4 and plugging members 3 of the ceramic body, is a component having a small linear expansion coefficient, for example, at least any one kind of cordierite ($2MgO \cdot 2Al_2O_3 \cdot 5SiO_2$), β-eucryptite ($Li_2O \cdot Al_2O_3 \cdot 2SiO_2$), β-spodumene ($Li_2O \cdot Al_2O_3 \cdot 4SiO_2$), silicon carbide (SiC), silicon nitride ($Si_3N_4$), sialon ($Si_{6-z}Al_zO_zN_{8-z}$, wherein z is a solid solution content and is 0.1 or more 1 or less), mullite ($3Al_2O_3 \cdot 2SiO_2$), calcium aluminate ($CaAl_4O_7$), potassium zirconium phosphate ($KZr_1(PO_4)$) and aluminum titanate ($Al_2TiO_5$).

The solid phases 8w, 8p are filled into, for example, microcracks 6a, 6c and fibrous cavities (not shown) existing from a surface of a part of crystal grains 5w, 5p to the inside, and can be observed in the image at a magnification of 1,000 times or more using an optical microscope or a scanning electron microscope. It is preferred that the number of the microcracks and fibrous cavities is 8 or more and 16 or less in a visual field measuring 60 μm × 56 μm when the magnification is 2,000 times. It is also preferred that the length and width of microcracks 6a, 6c are 6 μm or more and 18 μm or less, and 2.5 μm or less, respectively, and the curvature radius of the tip portion side inside is 0.5 μm or less. It is also preferred that the length and width of fibrous cavities are within the above range. It is possible to reduce a decrease in hardness caused by partial loss of crystal grains by adjusting the length and width of microcracks 6a, 6c within the above range. When the curvature radius of the tip portion side is adjusted within the above range, induction of microcracks around the tip portion side may be less likely to occur and thus a decrease in mechanical strength can be suppressed.

In the ceramic body that constitutes the partition wall 4 and plugging members 3 of the honeycomb structure 1 of the present invention of the example shown in Figs. 1 and 2, microcracks 6b, 6d respectively exist on grain boundary phases 7w, 7p, as shown in Figs. 3(a) and 3(b).

As shown in Figs. 3(a) and 3(b), it is preferred that microcracks 6b, 6d exist on grain boundary phases 7w, 7p. When microcracks 6b, 6d respectively exist on grain boundary phases 7w, 7p, a part of residual stress accumulated is relieved through microcracks 6b, 6d upon by heating regeneration, and thus cracking is less likely to occur in the partition wall 4 and plugging member 3.

These microcracks 6b, 6d are microscopic cracks that cannot be visually observed. The microcracks 6b, 6d are observed, for example, in the image at a magnification of 1,000 times or more using an optical microscope or a scanning electron microscope. It is preferred that each number of the microcracks is 1 or more and 6 or less in a visual field measuring 60 $\mu$m $\times$ 56 $\mu$m when the magnification is 2,000 times. When each number of the microcracks 6b, 6d is within the above range, cracking is less likely to occur in the partition wall 4 and plugging members 3 and also each toughness of the partition wall 4 and plugging members 3 scarcely deteriorate.

As a pretreatment of observation, the partition wall 4 may be polished by a cross section polishing method after cutting out a part of a honeycomb structure 1 and embedding it in a resin.

In the honeycomb structure 1 of the present invention, it is preferred that a main component of the crystal grain 5w is aluminum titanate. When the main component of the crystal grain 5w is aluminum titanate, since aluminum titanate is a component having high heat resistance and thermal shock resistance, dissolved loss is less likely to occur and cracking is also less likely to occur in the partition wall 4 even when heating and cooling are repeated.

In the honeycomb structure 1 of the present invention, it is preferred that the main component of at least one of a crystal grain 5w of the partition wall 4 and a crystal grain 5p of the plugging member 3 is aluminum titanate. When the main component is aluminum titanate, dissolved loss is less likely to occur and cracking is also less likely to occur in at least one of the partition wall 4 and plugging member 3 made of a ceramic body containing crystal grains 5w, 5p, that contain aluminum titanate as a main component, even when eating and cooling are repeated, by means of the same action as that described above.

Herein, the main component of the crystal grains 5w, 5p respectively means a component that accounts for 50% by mass or more of 100 parts by mass of the entire components constituting the crystal grains 5w, 5p, and identification of this component is performed by an X-ray diffraction method, and the content of the component can be determined by ICP spectroscopy or fluorescent X-ray spectroscopy.

When the crystal grains 5w, 5p contain aluminum titanate ($Al_2TiO_5$) as the main component, it is preferred that the crystal grains respectively contain magnesium titanate ($MgTi_2O_5$) and iron titanate ($Fe_2TiO_5$) in a proportion of 16% by mass or more and 24% by mass or less for the following reason. That is, the proportion is an optimum proportion of aluminum titanate ($Al_2TiO_5$) having excellent heat resistance, magnesium titanate ($MgTi_2O_5$) having excellent corrosion resistance and iron titanate ($Fe_2TiO_5$) having excellent heat deterioration resistance, and heat resistance, corrosion resistance and heat deterioration resistance of the crystal grains 5w, 5p becomes satisfactory.

It is also preferred that grain boundary phases 7w, 7p contain silicon oxide as the main component in the honeycomb structure 1 of the present invention. When the grain boundary phases 7w, 7p contain silicon oxide as the main component, adjacent crystal grains 5w, 5p are strongly bonded to each other and also abnormal grain growth of crystal grains 5w, 5p is suppressed, and thus mechanical strength can be increased.

In the honeycomb structure 1 of the present invention, it is also preferred that at least one of a grain boundary phase 7w of a partition wall 4 and a grain boundary phase 7w of the plugging member 3 contain silicon oxide as the main component. When at least one of the grain boundary phase 7w and the grain boundary phase 7p contains silicon oxide as the main component, the grain boundary phases 7w, 7p and adjacent crystal grains are strongly bonded to each other and also abnormal grain growth of crystal grains are suppressed, and thus mechanical strength can be increased.

Particularly, it is preferred that silicon oxide accounts for 90% by mass or more of 100% by mass of the total of the respective oxides that constitute the grain boundary phases 7w, 7p.

This silicon oxide is preferred since silicon dioxide with the composition represented by $SiO_2$ has high stability, and may be nonstoichiometric silicon oxide with the composition represented by $SiO_2$-x (wherein x satisfies: $0 < x < 2$).

The grain boundary phases 7w, 7p may contain an oxide of an alkali metal, and the oxide of the alkali metal has low corrosion resistance to sulfates such as sodium sulfate and calcium sulfate contained in engine oil. Therefore, the content is preferably as small as possible and is preferably 12% by mass or less based on 100% by mass of an oxide constituting each of grain boundary phases 7w, 7p for the following reason. That is, when the content of the oxide of the alkali metal is within the above range, corrosion resistance of the ceramic body constituting each of the partition wall 4 and plugging member 3 to the sulfate scarcely deteriorates.

Particularly, it is more preferred that lithium oxide and sodium oxide accounts for 2% by mass or less of 100% in total of the oxide constituting each of grain boundary phases 7w, 7p.

Since aluminum oxide also has low resistance to the sulfate, it is preferred that aluminum oxide accounts for 15% by mass or less of 100% in total of the oxide constituting each of grain boundary phases 7w, 7p.

By the way, it is preferred that, in the honeycomb structure 1 of the example shown in Figs. 1 and 2 of the present invention, the ceramic body constituting the partition wall 4 is a ceramic body having a pore 9w shown in Fig. 3 (a), and the porosity is 35% by volume or more and 60% by volume or less, and the mean pore size is 5 $\mu$m or more and 26 $\mu$m or less for the following reason. That is, when the porosity and mean pore size of the ceramic body constituting the partition wall 4 are within the above range, an increase in pressure loss can be suppressed while maintaining mechanical characteristics, and the mean pore size and porosity may be determined in accordance with a mercury intrusion method.

Specifically, first, samples for measuring a mean pore size and porosity are cut out from the partition wall 4 so that the mass becomes 0.6 g or more and 0.8 g or less.

Next, using a mercury intrusion porosimeter, mercury is intruded into pores of each sample and the pressure applied to mercury and the volume of mercury intruded into the pore is measured.

The volume of mercury is equal to the volume of the pore, and the following equation 1 (Washburn's relational equation) is established between the pressure applied to Mercury and the pore size.

$$d = -4\sigma\cos\theta/P \qquad (1)$$

where

d: Pore size (m)
P: Pressure applied to mercury (Pa)
$\sigma$: Surface tension of mercury (0.485 N/m)
$\theta$: Contact angle between mercury and pores (130°)

Each pore size d to each pressure P is determined from the equation (1), and thus distribution of each pore size d and a cumulative pore volume can be induced. Then, a pore size (D50) in which the percentage of a cumulative pore volume is 50% may be regarded as a mean pore size, and the percentage of a cumulative pore volume to a volume of a sample may be regarded as porosity.

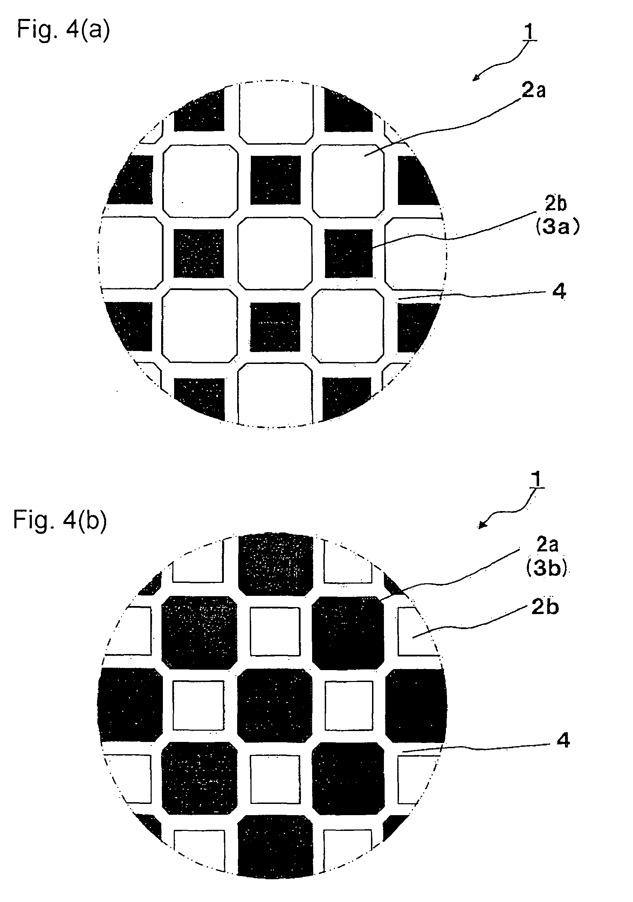

Fig. 4 shows another example of embodiments of the honeycomb structure of the present invention, in which Fig. 4(a) is a plan view showing a part of an input side end face, and Fig. 4(b) a plan view showing a part of an output side end face.

The honeycomb structure 1 of the example shown in Fig. 4 of the present invention has such a constitution that opened flow paths 2a and plugged flow paths 2b on the input side end face respectively have an octagon shape and a tetragon shape, and the area of the opened flow paths 2a is larger than that of the plugged flow paths 2b. On the input side end face, flow paths 2b are plugged by a plugging member 3a. On the output side end face, flow paths 2a are plugged by a plugging member 3b. As shown in Fig. 4, when opened flow paths 2a and plugged flow paths 2b on the input side end face respectively have an octagon shape and a tetragon shape, and the area of the opened flow paths 2a is larger than that of the plugged flow paths 2b, each surface area capable of adsorbing particulates of a partition wall 4 and a plugging member 3b becomes larger than that in case the area of the opened flow paths and the area of the plugged flow paths are the same, and thus particulates can be efficiently captured.

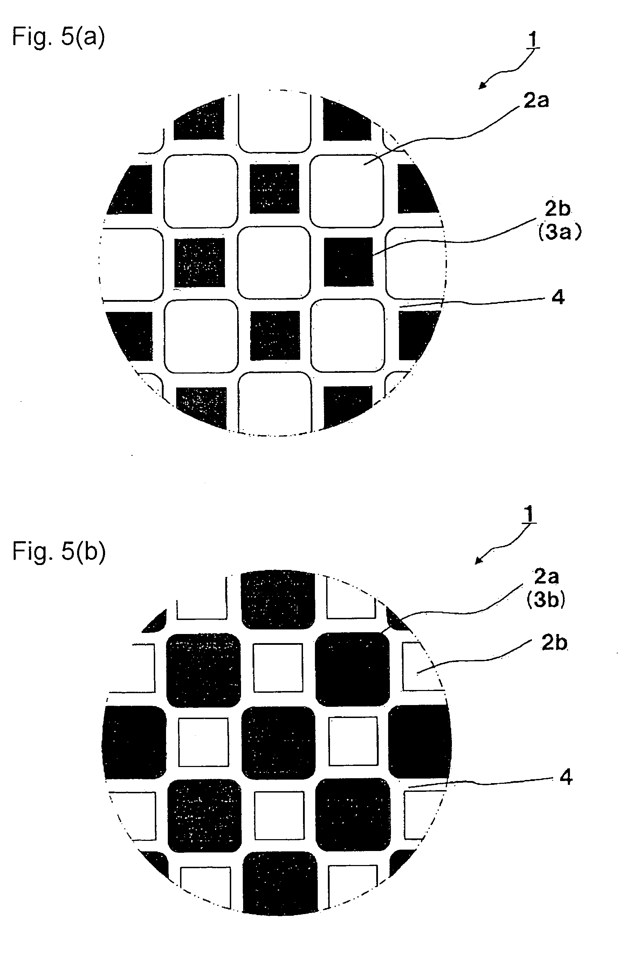

Fig. 5 shows another example of embodiments of the honeycomb structure of the present invention, in which Fig. 5(a) a plan view showing a part of an input side end face, and Fig. 5(b) is a plan view showing a part of an output side end face.

The honeycomb structure 1 of the example shown in Fig. 5 of the present invention has such a constitution that any of opened flow paths 2a and plugged flow paths 2b on the input side end face has a tetragon shape, and the opened flow paths 2a have an area larger than that of plugged flow paths 2b, and the corner portion had a circular arc shape. On the input side end face, flow paths 2b are plugged by a plugging member 3a. On the output side end face, flow paths 2a are plugged by a plugging member 3b. As shown in Fig. 5, when any of opened flow paths and plugged flow paths on the input side end face has a tetragon shape, and the opened flow paths have an area larger than that of plugged flow paths, and the corner portion had a circular arc shape, stress is less likely to be focused on the corner portion, in addition to the above-mentioned operation and effect, and thus cracking is less likely to occur even when heating and cooling are repeated. Particularly in the honeycomb structure 1 of the example shown in Fig. 5, it is preferred that the hydraulic diameter of opened flow paths 2a on the input side end face is 1.55 times or more and 1.95 times or less the hydraulic diameter of plugged flow paths 2b. In this way, by adjusting the ratio of the hydraulic diameter to 1.55 times or more, each surface area capable of adsorbing particulates of the partition wall 4 and plugging member 3b increases and thus the amount of particulates captured can be increased. Also, the partition wall 4 does not become excessively thin by adjusting the ratio of the hydraulic diameter to 1.99 times or less, and the thus mechanical strength is scarcely impaired. Herein, each hydraulic diameter of flow paths 2a, 2b means the diameter of an inscribed circle in contact with the partition wall 4 on the input side end face, and can be measured using an optical microscope.

The area of the plugged flow path 2b as used herein refers to an area inside in which the flow path 2b is plugged by the plugging member 3a.

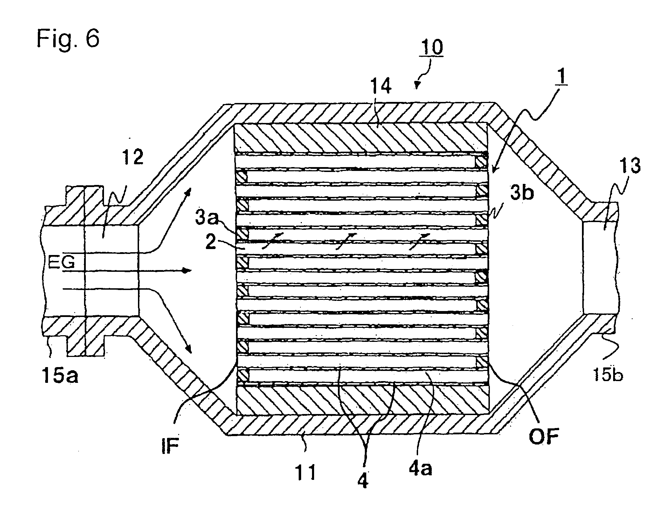

Fig. 6 is a schematic sectional view of a gas treatment device, that schematically shows an example of embodiments of the present invention.

The gas treatment device 10 of the example shown in Fig. 6 of the present invention is a gas treatment device provided with the honeycomb structure 1 of the present invention that supports a catalyst (not shown) on a wall face 4a of a partition wall 4, in which particulates in an exhaust gas (EG) is captured on the partition wall 4 by passing the exhaust gas (EG) from non-plugged one end of flow paths 2, as an input, to the non-plugged other end of flow paths 2, as an output, separated via the flow paths 2 and the partition wall 4. The honeycomb structure 1 is housed in a casing 11 in a state where the outer peripheral face is retained by a heat insulating material layer 14. The heat insulating material layer 14 is formed from, for example, at least one kind of a ceramic fiber, a glass fiber, a carbon fiber and a ceramic whisker.

The casing 11 is made of, for example, stainless steels such as SUS303, SUS304 and SUS316, and the center is formed into a cylindrical shape and both ends are formed into a circular truncated cone shape, and also exhaust pipes 15a, 15b are respectively connected to an inlet port 12, into which an exhaust gas (EG) is supplied, of the casing 11, and an outlet port 13 from which the exhaust gas (EG) is discharged.

When a diesel engine (not shown) is connected to the input side of the gas treatment device 10 and the diesel engine is operated and then an exhaust gas (EG) is supplied into the casing 11 through the exhaust pipe 15, the exhaust gas (EG) is introduced into flow paths 2 in which plugging members 3a on the input side of a honeycomb structure 1 is not formed. However, the exhaust gas is prevented from flowing out by plugging members 3b formed on the output side. The exhaust gas (EG), that is prevented from flowing out, passes through an air-permeable partition wall 4 and then introduced into adjacent flow paths 2. When the exhaust gas (EG) passes through the partition wall 4, particulates in the exhaust gas (EG) are captured on the wall face 4a of the partition wall 4 or a surface of pores of the partition wall 4. The exhaust gas (EG), from which particulates are captured, is discharged to the outside through the flow paths 2 in which plugging members 3b are not formed in a purified state.

In the gas treatment device of the example shown in Fig. 6, the catalyst supported on the wall face 4a of the partition wall 4 is, for example, made of at least any one kind of platinum group metals such as ruthenium, rhodium, palladium, osmium, iridium and platinum and oxides thereof, and group 11 metals of the Periodic Table, such as gold, silver and copper, and vanadium oxide and, when a gas obtained by vaporizing a fuel such as light oil is supplied, the catalyst oxidizes particulates in the exhaust gas captured on the partition wall 4 thereby causing combustion of the particulates. Particularly, when group 11 metals of the Periodic Table, such as gold, silver and copper are selected, the particles are preferably fine particles of a nanometer level.

Furthermore, it is preferred to support a component having a large specific surface area, such as $\gamma$-alumina on the wall face 4a of the partition wall 4 so as to increase a contact area between the catalyst supported on the wall face 4a and the exhaust gas.

In the honeycomb structure 1 of the present invention, as described above, when the catalyst is supported on the wall face 4a of the partition wall 4, it is possible to remove particulates by combustion at a low temperature as compared with the case the catalyst is not supported on the wall face 4a of the partition wall 4, and thus dissolved loss and cracking are less likely to occur on the partition wall 4, furthermore. It is preferred that the catalyst is supported not only on the wall face 4a, but also on e surface of pores of the partition wall 4.

Furthermore, together with a catalyst for combustion of particulates in the exhaust gas by oxidation, at least one kind of catalysts for reduction of nitrogen oxide (NOx) by occlusion, such as ZSM-5, ZSM-11, ZSM-12, ZSM-18, ZSM-23, MCM zeolite, mordenite, faujasite, ferrierite and zeolite beta may be supported on at least any one of the wall face 4a of the partition wall 4 and a surface of pores of the partition wall 4a.

Since the gas treatment device of the present invention has the honeycomb structure 1 of the present invention, cracking is less likely to occur on the partition wall 4, and thus regeneration can be efficiently performed over a long period.

While the example of using a gas such as an exhaust gas as a fluid was explained in the present embodiment, a liquid can also be used as the fluid. For example, city water or sewerage can be used as the fluid, and the gas treatment device of the present invention can be applied for filtration of a liquid.

One example of the method for producing a honeycomb structure 1 will be described below.

First, 27 to 33% by mass of a powder of aluminum oxide, 13 to 17% by mass of a powder of ferric oxide, 7 to 13% by mass of a powder of magnesium oxide, and a balance of a powder of titanium oxide are mixed to obtain a compounded material, which is mixed together with water, acetone or 2-propanol to obtain a slurry. The obtained slurry is dried by a spray drying method or the like to obtain granules having a mean particle size of 50 $\mu$m or more and 300 $\mu$m or less. All of the respective powders used herein are preferably powders having high purity, and the purity is preferably 99.0% by mass or more, and more preferably 99.5% by mass or more. As long as magnesium titanate ($MgTi_2O_5$) and iron titanate ($Fe_2TiO_5$) are solid soluble in aluminum titanate ($Al_2TiO_5$), powders of a carbonate, a hydroxide, a nitrate and the like maybe used, in addition to powders of these metal oxides, and powders of these compounds may also be used.

Next, the obtained granules are calcined in an ambient atmosphere at a temperature of 1,400°C or higher and 1,500°C or lower for 1 hour or more and 5 hours or less, thereby making it possible to obtain a calcined powder composed of a pseudobrookite-type crystal in which elements Ti, Al, Mg and Fe are solid-solved with each other.

This calcined powder is passed through a sieve having a grain size number described in ASTM E 11-61 of 230 mesh to obtain a classified calcined powder having a particle size of 25 $\mu$m or more and 61 $\mu$m or less. To a part of this classified calcined powder, a silicon oxide powder having a mean particle size of 1 $\mu$m or more and 3 $\mu$m or less in the additive amount of 0.4 part by mass or more and 1.2 parts by mass or less based on 100 parts by mass of the calcined powder, and a pore forming agent such as graphite, a starch or a polyethylene resin in the additive amount of 1 part by mass or more and 13 parts by mass or less based on 100 parts by mass of the calcined powder are added, and also a plasticizer, a thickener, a lubricant, water and the like are added, and then the mixture is kneaded using a universal mixer, a rotary mill or a type V mixer to obtain a kneaded mixture. Then, the obtained kneaded mixture is kneaded using a three-roll mill, kneader or the like to obtain a plasticized kneaded mixture.

Next, the obtained plasticized kneaded mixture is formed using an extrusion molding machine. A die is mounted in this extrusion molding machine and this die has an inner diameter, from which an outer diameter of a green compact is determined, of 100 m or more and 250 mm or less and includes a slit for forming a partition wall 4 of a honeycomb structure 1. The kneaded mixture is charged in the extrusion molding machine with this die mounted therein, and then formed into a honeycomb-shaped green compact by applying a pressure. Thereafter, the obtained green compact was dried and cut into a predetermined length.

Next, a plugging member 3 where each of one end and the other end of a plurality of flow paths 2 of the obtained green compact is alternately plugged is produced. Specifically, first, flow paths 2 that are open were subjected to masking so that the flow paths 2 to be plugged on the output side are disposed in a checkered pattern and then the masked output end face (the symbol OF in Fig. 6) is dipped in the kneaded mixture converted into a slurry. Flow paths 2 having the non-masked output end face (OF) are provided with a tip portion coated with a water-repelling resin inserted from the input end face (the symbol IF in Fig. 6), and pins with a tip portion having a flat shape are inserted into flow paths 2 from the input end face (IF) in advance, and then the slurry penetrated into the flow paths 2 on the output side is dried at a normal temperature. Thus, a plugging member 3b is formed on the output side of the green compact. The pins are removed and the same operation as described above was carried out on the input side (IF) to form a plugging member 3a on the input side of the green compact.

Next, the obtained green compact is fired. Specifically, using a firing furnace such as an electric furnace or a gas burning furnace, the temperature is controlled to 1,300°C to 1,500°C, and then the green compact is fired by maintaining at this temperature for 1 hour to 10 hours. In this firing step, a main component of a grain boundary phase 7w respectively penetrates into microcracks 6a, and the main component of this grain boundary phase 7w is converted into a solid phase 8w after sintering and exists in the microcracks 6a.

In order to allow the solid phase 8p containing the main component of the grain boundary phase 7p to exist from the surface to the inside in at least a part of crystal grains 5p of the plugging member 3, the green compact may be further retained for additional 1 to 2 hours.

In the honeycomb structure 1 thus produced, a part of accumulated residual stress is absorbed to solid phases 8w, 8p in microcracks 6a, 6c or absorbed to grain boundary phases 7w, 7p via the solid phases 8w, 8p and then relieved by heating upon regeneration, and thus cracking is less likely to occur in the partition wall 4 and the plugging member 3.

Examples

Examples of the present invention will be specifically described below, but the present invention is not limited to the following Examples.

(Example 1)

First, in order to obtain a honeycomb structure in which a main component of a crystal grain 5w of a partition wall 4 and a crystal grain 5p of the plugging members 3 is aluminum titanate, a compounded material obtained by mixing 30% by mass of a powder of aluminum oxide, 14% by mass of a powder of ferric oxide, 10% by mass of a powder of magnesium oxide and a balance of a powder of titanium oxide were mixed with water to obtain a slurry, which was then dried by a spray drying method to obtain granules having a mean particle size of 175 $\mu$m. Herein, as all of the respective powders of aluminum oxide, ferric oxide, magnesium oxide and titanium oxide, powders having a purity of 99.5% by mass were used.

Next, the obtained granules were calcined in an ambient atmosphere at a temperature of 1,450°C for 3 hours to obtain a calcined powder composed of a pseudobrookite-type crystal in which elements Ti, Al, Mg and Fe are solid-solved with each other.

This calcined powder was passed through a sieve having a grain size number described in ASTM E 11-61 of 230 mesh to obtain a classified calcined powder having a particle size of 25 $\mu$m or more and 61 $\mu$m or less. To a part of this classified calcined powder, a silicon oxide powder having a mean particle size of 2 $\mu$m in the additive amount of 0.8 part by mass based on 100 parts by mass of the calcined powder, and a polyethylene resin in the additive amount of 7 part by mass based on 100 parts by mass of the calcined powder were added, and also a plasticizer, a thickener, a lubricant, water and the like were added, and then the mixture was kneaded using a universal mixer to obtain a kneaded mixture. Then, while remaining a part of the obtained kneaded mixture, kneaded was performed using a kneader to obtain a plasticized kneaded mixture.

Next, the obtained plasticized kneaded mixture was charged in an extrusion molding machine with a die having an inner diameter, from which an outer diameter of a green compact is determined, of 250 mm and includes a slit for forming a partition wall 4 of a honeycomb structure 1 mounted therein, and then formed into a honeycomb-shaped green body by applying a pressure. Thereafter, the obtained green compact was dried and cut into a predetermined length.

Next, flow paths 2 that are open were subjected to masking so that the flow paths 2 to be plugged on the output side are disposed in a checkered pattern and the masked output end face (OF) was dipped in the remaining kneaded mixture converted into a slurry. Pins with a tip portion coated with a water-repelling resin, having a flat shape, were inserted into flow paths 2 from the input end face (IF) in advance, and then the slurry penetrated into the flow paths 2 on the output side was dried at a normal temperature. Thus, a plugging member 3b was formed on the output side of the green compact. The pins were removed and the same operation as described above was carried out on the input side (IF) to form a plugging member 3a on the input side of the green compact.

Using an electric furnace, the green compact was fired at the firing temperature for the retention time shown in Table 1 to obtain samples Nos. 1 to 3 in which an input end face (IF) and an output end face (OF) are respectively honeycomb structures 1 shown in Fig. 5(a) and Fig. 5(b).

Next, in order to obtain a honeycomb structure in which a main component of a crystal grain 5w of a partition wall 4 and a crystal grain 5p of the plugging members 3 is cordierite, a powder of synthesized cordierite in which each content of magnesium oxide, aluminum oxide and silicon oxide is respectively 13.5% by mass, 35.5% by mass and 50% by mass was passed through a sieve having a grain size number described in ASTM E 11-61 of 230 mesh to obtain a classified powder having a particle size of 25 $\mu$m or more and 61 $\mu$m or less of cordierite. To a part of the classified powder of cordierite, a powder of titanium oxide having a mean particle size of 2 $\mu$m in the additive amount of 0.8 part by mass of based on 100 parts by mass of the powder and a polyethylene resin in the additive amount of 7 parts by mass based on 100 parts by mass of the powder were added, and also a plasticizer, a thickener, a lubricant, water and the like were further added, and then the mixture is kneaded using a universal mixer to obtain a kneaded mixture. Then, while remaining a part of the obtained kneaded mixture, kneading was performed using a kneader to obtain a plasticized kneaded mixture.

Hereinafter, the operation was performed in the same manners in the above samples Nos. 1 to 3 until plugging members 3a, 3b are formed.

Using an electric furnace, the green compact was fired at the firing temperature for the retention time shown in Table 1 to obtain samples Nos. 4 to 6 in which an input end face (IF) and an output end face (OF) are respectively honeycomb structures 1 shown in Fig. 5(a) and Fig. 5(b).

Next, in order to obtain a honeycomb structure in which a main component of a crystal grain 5w of a partition wall 4 and a crystal grain 5p of the plugging members 3 is calcium aluminate, a polyethylene resin in the amount of 7 parts by mass based on 100 parts by mass of the compounded material was added to a compounded material in which each content of a powder of aluminum oxide, a powder of calcium carbonate and a powder of zirconium oxide is respectively 63.5% by mass, 33.5% by mass and 3% by mass, and also a plasticizer, a thickener, a lubricant, water and the like were further added, and then the mixture is kneaded using a universal mixer to obtain a kneaded mixture. Then, while remaining a part of the obtained kneaded mixture, kneading was performed using a kneader to obtain a plasticized kneaded mixture.

Hereinafter, the operation was performed in the same manners in the above samples Nos. 1 to 3 until plugging members 3a, 3b are formed.

Using an electric furnace, the green compact was fired at the firing temperature for the retention time shown in Table 1 to obtain samples Nos. 7 to 9 in which an input end face (IF) and an output end face (OF) are respectively honeycomb structures 1 shown in Fig. 5(a) and Fig. 5(b).

Any of samples Nos. 1 to 9 was a honeycomb structure 1 in which an outer diameter and a length in an axial direction A are respectively 144 mm and 156 mm, and the number of flow paths 2 in a cross section perpendicular to an axial direction A is 300 CPSI per unit area.

A partition wall 4 and a and plugging member 3 were polished by a cross section polishing method after cutting out a part of the partition wall 4 and the plugging member 3 of samples Nos. 1 to 9 and embedding them in a resin.

Specifically, using a sample manufacturing device for a scanning electron microscope (Cross Section Polisher, manufactured by JEOL Ltd.SM-09010), the partition wall 4 and the plugging member 3 were respectively polished by adjusting an acceleration voltage of argon ions to be irradiated to 6 kV and adjusting a flow rate of an argon gas to 70 to 80% of a maximum value of a current of argon ion to be detected, for a polishing time of 8 hours.

Using a scanning electron microscope, the polished partition wall 4 and the plugging member 3 of each sample were respectively observed at a magnification of 2,000 times in a visual field measuring 60 μm × 45 μm, and then it was examined whether or not solid phases 8w, 8p containing a main component of grain boundary phases 7w, 7p exist from a surface to the inside of at least a part of crystal grains 5w, 5p. Samples where solid phases 8w, 8p were observed were rated "Good", whereas, samples where solid phases 8w, 8p were not observed were rated "Poor". The results are shown in Table 2.

When solid phases 8w, 8p are observed in grain boundary phases 7w, 7p, elements constituting each main component of the grain boundary phases 7w, 7p and solid phases 8w, 8p were determined by fluorescent X-ray spectroscopy, and compounds thereof were identified by an X-ray diffraction method. The results are shown in Table 2.

After separately connecting an input end face (IF) of each sample to each diesel particulate generator (not shown), dry air containing particulates at a temperature of 25°C was sprayed toward each sample at a flow rate per unit time of 2.27 Nm$^3$/minute from this diesel particulate generator and 12 g of particulates were captured relative to a volume of 0.001 m$^3$ of a honeycomb structure 1.

Using an electric heater (not shown) disposed on the side of the input end face (IF) of the honeycomb structure 1, the honeycomb structure 1 was regenerated by combusting to remove the captured particulates.

Under the regeneration conditions of a combustion temperature of 1,200°C and a combustion time of 10 minutes in the vicinity of the input end face (IF), air was supplied to the honeycomb structure 1 and a flow rate per unit time of the air was set at 1.0 m$^3$/minute. After regeneration of each sample, 12 g of particulates were captured again relative to a volume of 0.001 m$^3$ of a honeycomb structure 1 in the same manner as described above. One cycle composed of capture and regeneration was repeated. After regeneration, the partition wall 4 and plugging member 3 were visually observed and the number of cycles until cracking, that can be regarded as macrocracks, is observed first was determined. The results are shown in Table 2.

[Table 1]

| Sample No. | Main component of crystal grain 5w of partition wall 4 | Main component of crystal grain 5p of plugging member 3 | Firing temperature (°C) | Retention time (hours) |
|---|---|---|---|---|
| *1 | Al$_2$TiO$_5$ | Al$_2$TiO$_5$ | 1,245 | 2 |
| 2 | Al$_2$TiO$_5$ | Al$_2$TiO$_5$ | 1,380 | 2 |
| 3 | Al$_2$TiO$_5$ | Al$_2$TiO$_5$ | 1,380 | 3 |
| *4 | 2MgO·2Al$_2$O$_3$·5SiO$_2$ | 2MgO·2Al$_2$O$_3$·5SiO$_2$ | 1,380 | 6 |
| 5 | 2MgO·2Al$_2$O$_3$·5SiO$_2$ | 2MgO·2Al$_2$O$_3$·5SiO$_2$ | 1,420 | 6 |
| 6 | 2MgO·2Al$_2$O$_3$·5SiO$_2$ | 2MgO·2Al$_2$O$_3$·5SiO$_2$ | 1,420 | 7 |
| *7 | CaAl$_4$O$_7$ | CaAl$_4$O$_7$ | 1,550 | 6 |
| 8 | CaAl$_4$O$_7$ | CaAl$_4$O$_7$ | 1,580 | 6 |
| 9 | CaAl$_4$O$_7$ | CaAl$_4$O$_7$ | 1,580 | 7 |
| (*:Samples departing from the scope of the present invention) | | | | |

[Table 2]

| Sample No. | Solid phase 8w | Solid phase 8p | Main component of grain boundary phase 7w | Main component of solid phase 8w | Main component of grain boundary phase 7p | Main component of solid is phase 8p | Number of cycles at which cracking is observed in partition wall 4 (cycles) | Number of cycles at which cracking is observed in plugging member 3 (cycles) |
|---|---|---|---|---|---|---|---|---|
| *1 | Poor | Poor | $SiO_2$ | - | $SiO_2$ | - | 5 | 6 |
| 2 | Good | Poor | $SiO_2$ | $SiO_2$ | $SiO_2$ | - | 20 | 10 |
| 3 | Good | Good | $SiO_2$ | $SiO_2$ | $SiO_2$ | $SiO_2$ | 20 | 21 |
| *4 | Poor | Poor | $TiO_2$ | - | $TiO_2$ | - | 4 | 5 |
| 5 | Good | Poor | $TiO_2$ | $TiO_2$ | $TiO_2$ | - | 18 | 8 |
| 6 | Good | Good | $TiO_2$ | $TiO_2$ | $TiO_2$ | $TiO_2$ | 18 | 19 |
| *7 | Poor | Poor | $ZrO_2$ | - | $ZrO_2$ | - | 4 | 5 |
| 8 | Good | Poor | $ZrO_2$ | $ZrO_2$ | $ZrO_2$ | - | 18 | 9 |
| 9 | Good | Good | $ZrO_2$ | $ZrO_2$ | $ZrO_2$ | $ZrO_2$ | 19 | 19 |
| (*: Samples departing from the scope of the present invention) | | | | | | | | |

As shown in Table 2, in samples Nos. 1, 4 and 7 departing from the scope of the present invention, since the respective solid phases 8w, 8p, that contains a main component of a grain boundary phase from a surface to the inside of crystal grains contained in a ceramic body constituting the partition wall 4 and plugging member 3, do not exist, cracking was observed in the honeycomb structure 1 at an early stage.

In contrast, in samples Nos. 2, 3, 5, 6, 8 and 9 of the present invention, since the solid phase 8w, that contains a main component of at least a part of a grain boundary phase 7w from a surface to the inside of crystal grains 5w contained in a ceramic body constituting the partition wall 4 exist, a part of accumulated residual stress is relieved as a result of absorption to the solid phase 8w or the grain boundary phase 7w through the solid phase 8w by heating upon regeneration, and thus cracking is not observed in the partition wall 4 even when regeneration is repeated, and it can be said that the partition wall 4 is less likely to be damaged. Among these sample, in samples Nos. 3, 6 and 9 of the present invention in which the retention time of firing is prolonged by each 1 hour, since the solid phase 8p containing a main component of at least a part of a grain boundary phase 7p exists from a surface to the inside of crystal grains contained in a ceramic body constituting a plugging member 3, in addition to the partition wall 4, a part of accumulated residual stress is relieved as a result of absorption to the solid phase 8p or the grain boundary phase 7p through the solid phase 8p by heating upon regeneration, and thus cracking is not observed in the plugging member 3 even when regeneration is repeated, and it can be said that the plugging member 3 is less likely to be damaged.

(Example 2)

A test for confirming a difference in isostatic failure strength (mechanical strength) by the fact, that a grain boundary phase contains silicon oxide as main component, was performed.

First, in order to obtain a honeycomb structure in which a main component of a crystal grain 5w of a partition wall 4 and a crystal grain 5p of the plugging members 3 is aluminum titanate, a calcined powder was produced by the same production method as that in Example 1, using the same compounded material as in samples Nos. 1 to 3 of Example 1. Then, four kinds of powders ($SiO_2$ $ZrO_2$ $SnO_2$, $Cr_2O_3$) each having a mean particle size of 2 $\mu$m, that serve as a main component of grain boundary phases 7w and 7p shown in Table 3 in the additive amount of 0.8 part by mass based on 100 parts by mass of the calcined powder, and a polyethylene resin in the additive amount of 5 parts by mass based on 100 parts by mass of the calcined powder were added to a part of the classified calcined powder, and also a plasticizer, a thickener, a lubricant, water and the like were further added, and then the mixture was kneaded using a universal mixer to obtain four kinds of kneaded mixtures. Then, while remaining a part of the obtained kneaded mixture, kneaded was performed using a kneader to obtain a plasticized kneaded mixture.

Next, the obtained plasticized kneaded mixture was charged in an extrusion molding machine with a die having an inner diameter, from which an outer diameter of a green compact is determined, of 250 mm and includes a slit for forming a partition wall 4 of a honeycomb structure 1 mounted therein, and then formed into a honeycomb-shaped green compact by applying a pressure. Thereafter, the obtained green compact was dried and cut into a predetermined length.

Next, flow paths 2 that are open were subjected to masking so that the flow paths 2 to be plugged on the output side are disposed in a checkered pattern. The kneaded mixture, in which a main component of the grain boundary phase 7p of the plugging member 3 becomes the component shown in Table 3 was selected from the above kneaded mixtures, and the masked output end face (OF) was dipped in a slurry of the kneaded mixture. Pins with a tip portion having a flat shape coated with a water-repelling resin were inserted into flow paths 2 through the input end face (IF) in advance, and then the slurry penetrated into the flow paths 2 on the output side was dried at a normal temperature. Thus, a plugging member 3b was formed on the output side of the green compact. The pins were removed and the same operation as described above was carried out on the input side (IF) to form a plugging member 3a on the input side of the green compact.

Using an electric furnace, the green compact was maintained at a firing temperature of 1,380°c for 3 hours to obtain samples Nos. 10 to 15 in which an input end face (IF) and an output end face (OF) are respectively honeycomb structures 1 shown in Fig. 5(a) and Fig. 5(b).

Any of samples Nos. 10 to 15 was a honeycomb structure 1 in which an outer diameter and a length in an axial direction A are respectively 144 mm and 117 mm, and the number of flow paths 2 in a cross section perpendicular to an axial direction A is 300 CPSI per unit area.

In order to evaluate the mechanical strength of each sample, isostatic failure strength of each sample was measured in accordance with JASO M 505-87. The measured values are shown in Table 3. At this time, each sample was separately disposed in a container made of a rubber, having respectively an inner diameter and a height of 175 mm and 640 mm. Using water as a medium for filling into the container, a pressure was applied at a pressure increase rate of 0.3 MPa/minute.

[Table 3]

| Sample No. | Powder serving as main powder of grain boundary phase 7w | Powder serving as main powder of grain boundary phase 7p | Main component of grain boundary phase 7w | Main component of solid phase 8w | Main component of grain boundary phase 7p | Main component of solid phase 8p | Isostatic failure strength (MPa) |
|---|---|---|---|---|---|---|---|
| 10 | $SiO_2$ | $SiO_2$ | $SiO_2$ | $SiO_2$ | $SiO_2$ | $SiO_2$ | 2.4 |
| 11 | $SiO_2$ | $ZrO_2$ | $SiO_2$ | $SiO_2$ | $ZrO_2$ | $ZrO_2$ | 2.3 |
| 12 | $ZrO_2$ | $SiO_2$ | $ZrO_2$ | $ZrO_2$ | $SiO_2$ | $SiO_2$ | 2.2 |
| 13 | $SnO_2$ | $SnO_2$ | $SnO_2$ | $SnO_2$ | $SnO_2$ | $SnO_2$ | 1.6 |
| 14 | $ZrO_2$ | $ZrO_2$ | $ZrO_2$ | $ZrO_2$ | $ZrO_2$ | $ZrO_2$ | 1.6 |
| 15 | $Cr_2O_3$ | $Cr_2O_3$ | $Cr_2O_3$ | $Cr_2O_3$ | $Cr_2O_3$ | $Cr_2O_3$ | 1.5 |

As shown in Table 3, in samples Nos. 10 to 12, since at least one of a grain boundary phase 7w of a partition wall 4 and a grain boundary phase 7w of a plugging member 3 contains silicon oxide as a main component, the grain boundary phase and the adjacent crystal grains are strong bonded to each other, and also abnormal grain growth of the crystal grain is suppressed. Therefore, it can be said that these samples have high isostatic failure strength and high mechanical strength.

Particularly in sample No. 10, since both a grain boundary phase 7w of a partition wall 4 and a grain boundary phase 7w of a plugging member 3 contain silicon oxide as a main component, a grain boundary phase 7w and adjacent crystal grains 5w, and a grain boundary phase 7p and adjacent crystal grains 5p are strongly bonded to each other, and also abnormal grain growth of crystal grains 5w, 5p is suppressed. Therefore, it can be said that this sample has high isostatic failure strength and high mechanical strength.

Brief Description of Reference Symbols

| | |
|---|---|
| 1: | Honeycomb structure |
| 2, 2a, 2b: | Flow paths |
| 3, 3a, 3b: | Plugged portions |
| 4: | Partition wall |
| 4a: | Wall face |
| 5w, 5p: | Crystal grains |
| 6a, 6b, 6c, 6d: | Cracks |
| 7w, 7p: | Grain boundary phases |
| 8w, 8p: | Solid phases |
| 9w, 9p: | Pores |
| 10: | Exhaust gas treatment device |
| 11: | Casing |
| 12: | Inlet port |
| 13: | Outlet port |
| 14: | Heat insulating material layer |
| 15: | Exhaust pipe |

**Claims**

1.  A honeycomb structure comprising:

    a plurality of flow paths separated from each other by an air-permeable partition wall including a wall face along an axial direction, and
    plugging members plugging an input side and an output side of the plurality of flow paths alternately,
    wherein the partition wall is made of a ceramic body containing a plurality of crystal grains and wherein a solid phase containing a main component of a grain boundary phase exists from a surface to the inside in at least a part of the crystal grains.

2.  The honeycomb structure according to claim 1,
    wherein the plugging member is made of a ceramic body containing a plurality of crystal grains and wherein a solid phase containing a main component of a grain boundary phase exists from a surface to inside in at least a part of the crystal grains of the plugging member.

3.  The honeycomb structure according to claim 1,
    wherein a main component of the crystal grain is aluminum titanate.

4.  The honeycomb structure according to claim 2,
    wherein a main component of at least one of the crystal grain of the partition wall and the crystal grain of the plugging member is aluminum titanate.

5. The honeycomb structure according to claim 1,
   wherein the grain boundary phase contains silicon oxide as a main component.

6. The honeycomb structure according to claim 1,
   wherein at least one of the grain boundary phase of the partition wall and the grain boundary phase of the plugging member contain silicon oxide as a main component.

7. The honeycomb structure according to claim 1,
   wherein the opened flow path and the plugged flow path in an input side end face respectively have an octagon shape and a tetragon shape, and an area of the opened flow path is larger than an area of the plugged flow path.

8. The honeycomb structure according to claim1,
   wherein the opened flow path and the plugged flow path in an input side end face have a tetragon shape, and the opened flow path has an area larger than an area of plugged flow path, and wherein the corner portion of the opened flow path has a circular arc shape.

9. The honeycomb structure according to claim 1,
   wherein a catalyst is supported on the wall face of the partition wall.

10. A gas treatment device comprising the honeycomb structure according to claim 1.

Fig. 1(a)

Fig. 1(b)

Fig. 2(a)

Fig. 2(b)

Fig. 3(a)

Fig. 3(b)

Fig. 4(a)

Fig. 4(b)

Fig. 5(a)

Fig. 5(b)

Fig. 6

<table>
<tr><td colspan="3" align="center">**INTERNATIONAL SEARCH REPORT**</td><td>International application No.<br>PCT/JP2010/052865</td></tr>
</table>

A. CLASSIFICATION OF SUBJECT MATTER
*C04B35/46*(2006.01)i, *B01D39/20*(2006.01)i, *B01D46/00*(2006.01)i, *B01D53/94* (2006.01)i, *B01J35/04*(2006.01)i, *C04B35/195*(2006.01)i, *C04B35/44* (2006.01)i, *F01N3/02*(2006.01)i
According to International Patent Classification (IPC) or to both national classification and IPC

B. FIELDS SEARCHED

Minimum documentation searched (classification system followed by classification symbols)
C04B35/46, B01D39/20, B01D46/00, B01D53/94, B01J35/04, C04B35/195, C04B35/44, F01N3/02

Documentation searched other than minimum documentation to the extent that such documents are included in the fields searched
Jitsuyo Shinan Koho        1922-1996    Jitsuyo Shinan Toroku Koho    1996-2010
Kokai Jitsuyo Shinan Koho  1971-2010    Toroku Jitsuyo Shinan Koho    1994-2010

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 8-290963 A  (Matsushita Electric Industrial<br>Co., Ltd.),<br>05 November 1996 (05.11.1996),<br>claims; paragraphs [0008], [0012]; examples;<br>fig. 1, 2<br>(Family: none) | 1,3,5,9,10<br>2,4,6,7,8 |
| Y | WO 2008/096502 A1  (NGK Insulators, Ltd.),<br>14 August 2008 (14.08.2008),<br>claims; paragraphs [0025], [0036], [0042]; fig.<br>2, 3<br>& US 2009/0246455 A     & EP 2127719 A1 | 2,4,6,7 |

☒ Further documents are listed in the continuation of Box C.        ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>22 April, 2010 (22.04.10) | Date of mailing of the international search report<br>11 May, 2010 (11.05.10) |
|---|---|
| Name and mailing address of the ISA/<br>Japanese Patent Office | Authorized officer |
| Facsimile No. | Telephone No. |

Form PCT/ISA/210 (second sheet) (July 2009)

**EP 2 402 295 A1**

| | INTERNATIONAL SEARCH REPORT | International application No. |
|---|---|---|
| | | PCT/JP2010/052865 |

C (Continuation).    DOCUMENTS CONSIDERED TO BE RELEVANT

| Category* | Citation of document, with indication, where appropriate, of the relevant passages | Relevant to claim No. |
|---|---|---|
| Y | JP 2006-519953 A (Corning Inc.),<br>31 August 2006 (31.08.2006),<br>claims; paragraphs [0017], [0022]<br>& US 2004/0161583 A1    & EP 1594687 A<br>& WO 2004/073969 A2    & PL 377697 A<br>& CN 1750924 A | 8 |
| A | JP 2-258670 A (Kurosaki Corp.),<br>19 October 1990 (19.10.1990),<br>claims; page 4, upper right column, lines 1<br>to 6; lower right column, lines 7 to 9; fig. 1<br>(Family: none) | 1-10 |
| A | JP 56-89844 A (Asahi Glass Co., Ltd.),<br>21 July 1981 (21.07.1981),<br>claims; examples<br>& US 4327188 A          & CA 1138404 A | 1-10 |
| A | JP 7-61862 A (Honda Motor Co., Ltd.),<br>07 March 1995 (07.03.1995),<br>paragraph [0015]<br>(Family: none) | 1-10 |
| A | JP 2008-105024 A (Kyocera Corp.),<br>08 May 2008 (08.05.2008),<br>claims<br>(Family: none) | 1-10 |
| A | JP 5-58722 A (NGK Insulators, Ltd.),<br>09 March 1993 (09.03.1993),<br>paragraph [0007]<br>& US 5346870 A          & DE 4228527 A1<br>& BE 1005895 A | 1-10 |

Form PCT/ISA/210 (continuation of second sheet) (July 2009)

**INTERNATIONAL SEARCH REPORT**

| International application No. |
| --- |
| PCT/JP2010/052865 |

**Box No. II** **Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III** **Observations where unity of invention is lacking (Continuation of item 3 of first sheet)**

This International Searching Authority found multiple inventions in this international application, as follows:
```
   The invention described in claim 1 does not have a novelty and a special
technical feature, since the invention is described in the following document
1.  Consequently, the invention in claim 1 does not satisfy the requirement
of unity of invention.
   The inventions in claims as indicated below are relevant to main invention.
   Claims 1, 2, 4
   Document 1: JP 8-290963 A (Matsushita Electric Industrial Co., Ltd.) 05
November 1996 (05.11.1996), claims, paragraphs [0008], [0012], examples, fig.
1, 2
```

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**  ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 9029022 A